# EUROPÄISCHE PATENTANMELDUNG

(11) **EP 0 536 567 A1**
(43) Veröffentlichungstag der Anmeldung: **14.04.1993**
(21) Anmeldenummer: 92115807.7
(22) Anmeldetag: 16.09.1992
(51) Int. Cl.: F02D 41/22, F02D 11/10

(54) **Einrichtung zur Erfassung einer veränderlichen Grösse bei Fahrzeugen**

(30) Priorität: 10.10.1991 DE 4133571
(71) Anmelder: ROBERT BOSCH GMBH, 70442 Stuttgart (DE)
(72) Erfinder: Huber, Werner, Dr. Dipl.-Phys., W-7052 Schwaikheim (DE); Bederna, Frank, Dipl.-Ing., W-7145 Markgröningen (DE); Reppich, Andreas, W-7250 Leonberg (DE); Norgauer, Rainer, Dipl.-Ing., D-96049 Bamberg (DE)

(57) **Zusammenfassung**

Es wird eine Einrichtung zur Erfassung einer veränderlichen Größe bei Fahrzeugen vorgeschlagen, welche wenigstens zwei Meßeinrichtungen sowie Überwachungsmittel umfaßt, welche auf der Basis der Meßsignale der Meßeinrichtungen die Funktion dieser Meßeinrichtungen überprüft. Ferner ist eine weitere Meßeinrichtung (Schaltelement), vorgesehen, welche ebenfalls ein die veränderliche Größe repräsentierendes Signal erzeugt. Entscheidungsmittel wählen auf der Basis aller drei Meßsignale wenigstens eines der Meßsignale zur Steuerung der Antriebsleistung eines Motors in einem Fahrzeug aus. Das Schaltelement ist dabei ein Hall-Schalter.

## Beschreibung

### Stand der Technik

Die Erfindung betrifft eine Einrichtung zur Erfassung einer veränderlichen Größe bei Fahrzeugen gemäß dem Oberbegriff des Patentanspruchs 1.

Aus Gründen der Betriebssicherheit und der Verfügbarkeit von Fahrzeugen werden zunehmend sicherheitskritische Bauelemente, deren korrekte Funktion für den Betrieb des Fahrzeugs unerläßlich ist, zumindest teilweise redundant ausgelegt. Dies trifft auch besonders auf Einrichtungen zur Erfassung veränderlicher Größen des Motors oder des Fahrzeugs zu.

So wird in der DE-OS 35 39 407 vorgeschlagen, eine Meßeinrichtung zur Erfassung der Stellung eines leistungsbestimmenden Elements, einen Sollwertgeber, einen Drehzahlgeber und den die Bremspedalstellung erfassenden Geber doppelt vorzusehen.

Die DE-OS 35 10 173 (US-PS 4 603 675) beschreibt ein elektronisches Gaspedalsystem für ein Kraftfahrzeug, bei welchem die Meßeinrichtung zur Erfassung der Stellung eines vom Fahrer betätigbaren Bedienelements doppelt vorgegeben sind. Dabei sind entweder zwei, die Stellung erfassende Potentiometer oder eine Potentiometer-Schalter-Kombination vorgesehen. Durch Vergleich der von den beiden doppelten Meßeinrichtungen erzeugten Signalwerte auf ein vorgegebenes Toleranzband kann ein Fehlerzustand im Bereich des Fahrpedals, der Meßeinrichtungen und/oder deren Zuleitungen zum Steuersystem festgestellt werden, wenn die Signalwerte zueinander nicht innerhalb dieses Toleranzbandes liegen. Bei erkanntem Fehler wird das System in einen Notfahrbetrieb überführt.

Da bei derartigen Einrichtungen Sicherheitsüberlegungen im Vordergrund stehen, wird bei erkanntem Fehlerzustand ein die Verfügbarkeit des Fahrzeugs einschränkender Notfahrbetrieb eingeleitet. Diese eingeschränkte Verfügbarkeit ist jedoch ein gravierender Nachteil der bekannten Systeme.

Der Erfindung liegt daher die Aufgabe zugrunde, Einrichtungen zur Erfassung einer veränderlichen Größe bei Fahrzeugen und die Steuersysteme dieser Fahrzeuge derart auszugestalten, daß auch im Fehlerfall die Verfügbarkeit des Fahrzeugs ohne Abstriche bezüglich der Betriebssicherheit gewährleistet ist.

Dies wird dadurch erreicht, daß wenigstens eine weitere Meßeinrichtung, ein Schaltelement, vorhanden ist, das ein weiteres, die veränderliche Größe repräsentierendes Signal erzeugt. Ferner sind Entscheidungsmittel vorgesehen, die auf der Basis der Meßsignale und des weiteren Signals wenigstens eines dieser Signale zur Auswertung zur Steuerung des Fahrzeugs auswählen.

Aus der nicht vorveröffentlichten deutschen Patentanmeldung P 40 36 330.9 ist ein Stellungsgeber mit Mehrfachpotentiometer bekannt.

### Vorteile der Erfindung

Durch die erfindungsgemäßen Maßnahmen wird die Verfügbarkeit des Fahrzeugs auch im Fehlerfall einer Meßeinrichtung bzw. ihrer Zuleitung ohne daß die Betriebssicherheit gefährdet wird, gewährleistet.

Eine besonders einfache Ausführung der erfindungsgemäßen Vorgehensweise stellt ein in einem vorgegebenen Betriebspunkt schaltender Schalter als zusätzliche Meßeinrichtung dar. Durch Plausibiliätsüberprüfung aller drei Signale ist mit großer Wahrscheinlichkeit die defekte Meßeinrichtung bzw. die Zuleitung zu isolieren.

Diese Vorgehensweise führt zu dem vorteilhaften Ergebnis daß die Normalfunktion des Steuersystems dann unter Ausschaltung des defekten Elements abhängig von einem der beiden anderen oder von den beiden anderen auch weiterhin durchgeführt werden kann.

Besonders vorteilhaft ist die Anwendung der erfindungsgemäßen Vorgehensweise bei Stellungsgebern für Fahrpedal und/oder leistungsbestimmendem Element bei elektronischen Gaspedalsystemen für Fahrzeuge.

Eine weitere Erhöhung der Verfügbarkeit des Fahrzeugs kann durch Ausführen der dritten Meßeinrichtung in einer von den beiden anderen abweichenden Technik bzw. Technologie oder durch die Ausführung der drei Meßeinrichtungen in verschiedenen Techniken erreicht werden.

Insbesondere ist es vorteilhaft, das Signal des dritten Stellungsgebers berührungslos zu erzeugen. Besonders vorteilhaft ist die Integration eines auf dem Hall-Prinzip beruhenden Schalters in das Gehäuse der beiden anderen Meßeinrichtungen.

Vorteilhafte Resultate ergibt die erfindungsgemäße Vorgehensweise im Zusammenhang mit Doppelpotentiometern als Stellungsgeber.

Weitere Vorteile ergeben sich aus den Unteransprüchen und der nachfolgenden Beschreibung von Ausführungsbeispielen.

### Zeichnung

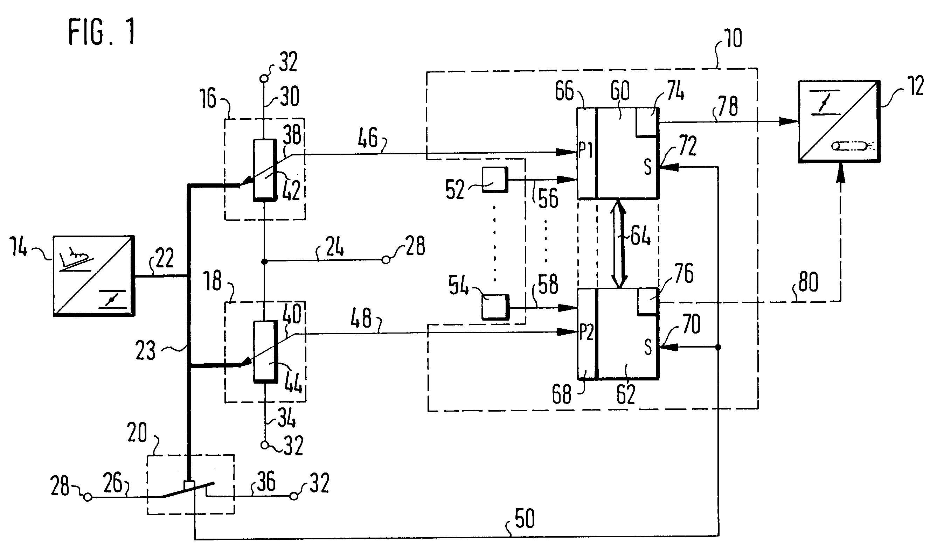

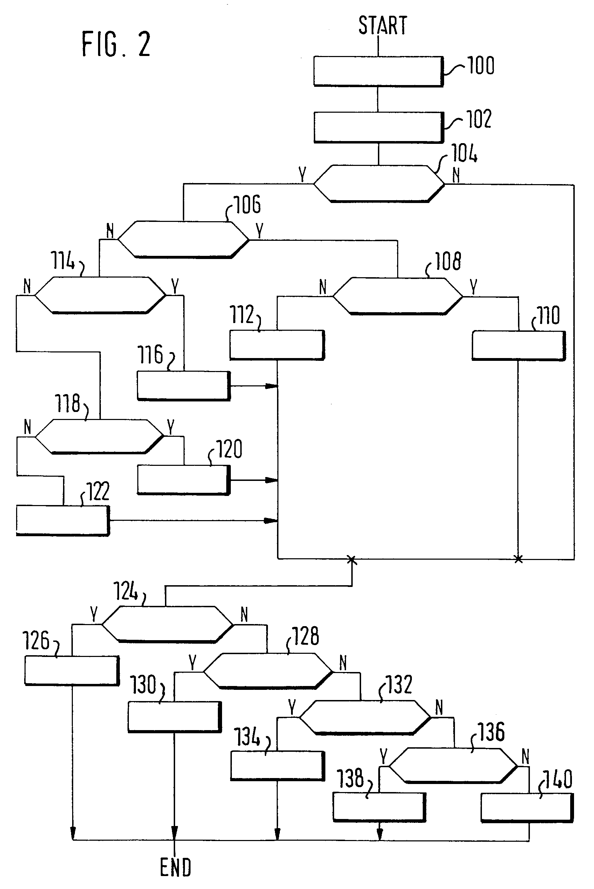

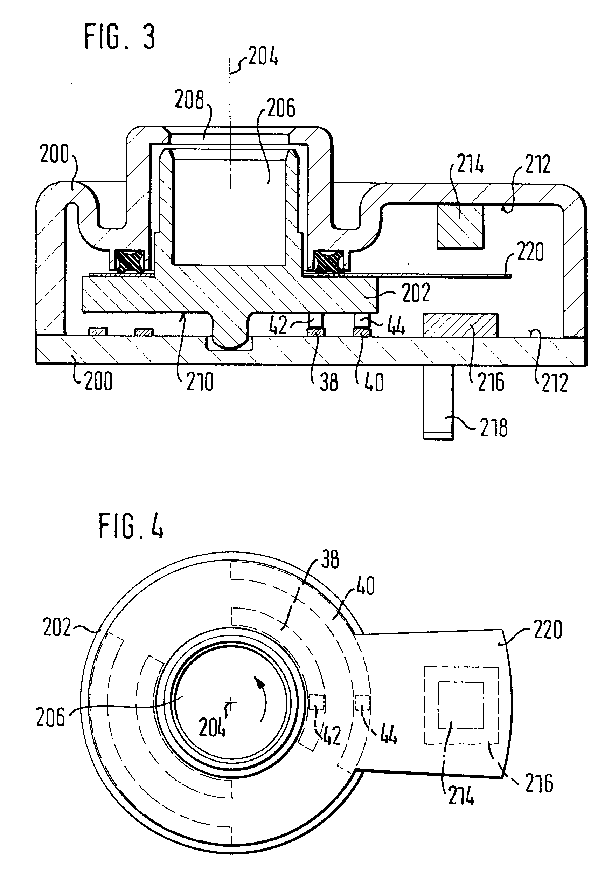

Die Erfindung wird nachstehend anhand der in der Zeichnung dargestellten Ausführungsformen erläutert. Figur 1 zeigt beispielhaft ein Übersichtsblockschaltbild für eine Ausführungsform der erfindungsgemäßen Maßnahmen. Figur 2 skizziert ein Flußdiagramm als Beispiel einer Realisierung der Auswertungsschritte in Form eines Rechenprogramms. In Figur 3 ist schließlich schematisch eine Ausführungsform der zusätzlichen Meßeinrichtung vorgestellt, Figur 4 skizziert eine Aufsicht auf die Ausführungsform nach Figur 3 unter Berücksichtigung der wesentlichen Elemente.

### Beschreibung von Ausführungsbeispielen

Figur 1 stellt beispielhaft ein Übersichtsblockschaltbild eines elektronischen Gaspedalsystems dar. Dabei ist mit 10 ein Steuersystem dargestellt. Ferner umfaßt das elektronische Gaspedalsystem eine Stelleinrichtung 12, welche mit einem leistungsbestimmenden Element des Fahrzeugs, z.B. einer Drosselklappe oder einer Einspritzpumpe, verbunden ist, sowie ein weiteres Element 14, welches ein vom Fahrer betätigbares Bedienelement (Fahrpedal) repräsentiert. In einem anderen Ausführungsbeispiel kann es sich bei Element 14 auch um das leistungsbestimmende Element oder die Stelleinrichtung 12 selbst handeln. Ferner ist die nachfolgend geschilderte Vorgehensweise auch vorteilhaft sowohl auf ein Bedienelement als auch auf ein leistungsbetimmendes Element anwendbar.

Ferner sind zwei Stellungsgeber 16 und 18 sowie eine zusätzliche Meßeinrichtung 20, ein Schaltelement, vorgesehen. Das Element 14 ist dabei über mechanische Verbindungen 22, 23 mit beweglichen Teilen der Meßeinrichtungen 16 bis 20 verbunden. Die von den Meßeinrichtungen 16 und 18 erzeugten Signalwerte werden über Verbindungsleitungen 46 bzw. 48 an das Steuersystem 10 abgegeben. Der Schaltzustand der zusätzlichen Meßeinrichtung 20 wird über die Verbindungsleitung 50 an das Steuersystem 10 abgegeben. Ferner sind Meßeinrichtungen 52 bis 54 vorhanden, welche über die Leitungen 56 bis 58 Betriebsgrößen von Antriebseinheit und/oder Fahrzeug an das Steuersystem 10 übermitteln.

Bei den Meßeinrichtungen 16 und 18 handelt es sich vorzugsweise um zwei redundante Stellungsgeber, insbesondere Potentiometer, wie in Figur 1 dargestellt, oder um berührungslose Meßeinrichtungen, wie induktive, kapazitive und/oder auf dem Wirbelstromprinzip arbeitende Sensoren. Die Meßeinrichtung 20 ist gegenüber der Meßeinrichtung 16 und 18 vorzugsweise in einer anderen Technik ausgeführt und stellt insbesondere ein berührungsloses Schaltelement dar, welches einen oder mehrere Schaltpunkte aufweist. Darüber hinaus können in einem Ausführungsbeispiel die Meßeinrichtungen 16 und 18 lediglich teilweise in einem vorgegebenen Stellungsbereich zueinander redundant sein, d.h. die Meßbereiche der beiden Meßeinrichtungen überlappen lediglich in einem Teil des Gesamtbereichs.

Ferner kann zum Beispiel die Meßeinrichtung 16 ein berührungsloser Sensor sein, die Meßeinrichtung 18 ein Potentiometer oder umgekehrt.

Im Falle der dargestellten Potentiometer sind die Meßeinrichtungen 16 und 18 über Verbindungsleitungen 24 und die Meßeinrichtung 20 über die Leitung 26 mit dem positiven Pol 28 einer Versorgungsspannung verbunden. Die Verbindungsleitung 30 verbindet die Meßeinrichtung 16 mit dem negativen Pol 32 der Versorgungsspannung, während für die Meßeinrichtung 18 diese Verbindung durch eine Leitung 34, für die Meßeinrichtung 20 durch die Leitung 36 hergestellt wird. In dem in Figur 1 dargestellten Ausführungsbeispiel ist die mechanische Verbindung 23 jeweils mit den Schleifern 38 und 40 der Potentiometer 16 und 18 sowie dem beweglichen Element der Meßeinrichtung 20 verbunden. Diese bewegen sich über die Widerstandsbahnen 42 bzw. 44. Die Signalleitungen 46 und 48 sind dabei mit den Schleifern 38 und 40 verbunden.

In einem bevorzugten Ausführungsbeispiel umfaßt das Steuersystem 10 zwei Mikrokontroller bzw. Rechenelemente 60 und 62, welche über ein Bussystem 64 zu Kommunikationszwecken miteinander verbunden sind. In anderen Ausführungsbeispielen kann es jedoch auch ausreichend sein, nur einen Mikrokontroller zu verwenden (strichliert dargestellt).

Die Mikrokontroller umfassen einen Eingangsbereich 66 bzw. 68, in welchem die von den Meßeinrichtungen 16 und 18 sowie 52 bis 54 gelieferten Signale u.a. in digitale Werte gewandelt werden. Die Signalleitung 50 ist auf die Eingänge 70 und 72 der Mikrokontroller 62 bzw. 60 geführt. An die Ausgangsbereiche 74 und 76 der Mikrokontroller 60 und 62 sind Ausgangsleitungen 78 und 80 angeschlossen, welche das Steuersystem 10 mit der Stelleinrichtung 12 verbinden. Diese kann im bevorzugten Ausführungsbeispiel allein über die Leitung 78 angesteuert werden, während in anderen Ausführungsbeispielen eine gemeinsame Ansteuerung über die Leitungen 78 und 80 von beiden Mikrokontrollern vorgesehen sein kann.

Das Steuersystem 10 bildet in aus dem Stand der Technik bekannter Weise in Abhängigkeit seiner Eingangssignale ein Ansteuersignal für die Stelleinrichtung 12 zur Einstellung des leistungsbestimmenden Elements. Die Einstellung erfolgt dabei im Sinne einer Steuerung der Antriebsleistung des Fahrzeugs gemäß dem über das Fahrpedal erfaßten Fahrerwunsch.

Stellt das Element 14 das Fahrpedal dar, so wird in Abhängigkeit eines der Signalwerte der Meßeinrichtung 16 (P1) oder 18 (P2) oder in Abhängigkeit des Mittelwerts der beiden Signale die Stellung des Fahrpedals erfaßt. Unter Berücksichtigung der über die Leitungen 56 bis 58 zugeführten Meßsignale, die Fahrgeschwindigkeit, Motortemperatur, Raddrehzahlen, Stellung des leistungsbestimmenden Elements, Bremsbetätigung, etc. repräsentieren, wird dann im Sinne einer Regelung der Stellung des leistungsbestimmenden Element auf einen aus den zugeführten Meßsignalwerten gebildeten Sollwert von dem Mikrokontroller oder beiden ein Ansteuersignal für die Stelleinrichtung 12 gebildet. Diese Vorgehensweise ist dem Fachmann aus dem Stand der Technik bekannt.

Durch Vergleich der von den Meßeinrichtungen 16 und 18 erzeugten Signalwerte miteinander im Sinne einer Plausibilitätsprüfung auf einen vorgegebenen Wertetoleranzbereich werden die Meßeinrichtungen 16 und 18 sowie ihre Zuleitungen (mechanische Verbindung 22, 23 Stromversorgungsverbindungen 24, 30, 34, Signalleitungen 46 und 48) überprüft. Dabei wird ein Fehler erkannt, wenn die beide Signalwerte zueinander nicht mehr in diesem Toleranzbereich liegen. Die Überwachung wird beispielsweise bei gegenläufigen Kennlinien der Potentiometer durch Addition der Signalwerte und Vergleich mit einem vorgegebenen Toleranzband(P1+P2 < Toleranzbereich) oder bei gleichläufigen Kennlinien durch die Überprüfung des Betrags der Differenz ( P1-P2 < Toleranzbereich) durchgeführt.

Zusätzlich werden Plausibilitätsüberprüfungen der beiden Signalwerte jeweils einzeln mit der Stellung des Schaltelements 20 durchgeführt, worauf bei Nichtplausibilität der Signalwerte der Meßeinrichtungen 16 und/oder 18 ableitbar ist, ob die Meßeinrichtung 16, 18 oder 20 defekt ist. Diese Überprüfung basiert darauf, daß für einen Meßwert der Meßeinrichtung 16 oder 18 das Schaltelement einen vorgegebenen Signal- bzw. Schaltzustand aufweisen muß.

Die Funktion des Steuersystems 10 wird dann in Abhängigkeit der zueinander plausiblen Signale ausgeführt.

Erst wenn alle Signalwerte zueinander unplausibel sind, ist die Einleitung eines Notlaufbetriebs mit Leistungsbegrenzung, z.B. durch Begrenzung der maximalen Stellung des leistungsbestimmenden Elements, vorgesehen.

Vorstehend ist ein Ausführungsbeispiel mit Stellungsgebern skizziert. Ähnliche Maßnahmen lassen sich auch auf Drehzahlgeber, Druckgeber, etc. anwenden. Ferner ist die erfindungsgemäße Vorgehensweise nicht nur auf die Anwendung bei Brennkraftmaschinen beschränkt, sondern auch vorteilhaft in Verbindung mit alternativen Fahrzeugantrieben, wie z.B. Elektromotoren, anwendbar.

Figur 2 zeigt ein Flußdiagramm, welches die Durchführung der Auswertung der drei Meßsignale zur Fehlererkennung und Steuerung der Antriebsleistung skizziert. Nach Start des Programmteils wird mit dem ersten Schritt 100 die Signalwerte der Meßeinrichtungen 16 (P1), 18 (P2) und 20 (S) eingelesen und im darauffolgenden Schritt 102 die von den Meßeinrichtungen 52 bis 54 erfaßten weiteren Betriebsgrößen. Im Abfrageschritt 104 wird anhand eines mitlaufenden Zählers überprüft, ob die nachfolgenden Überwachungsroutine ausgeführt werden soll. Diese Überwachungsroutine wird zu vorgegebenen Zeitpunkten nach mehrereren Programmdurchläufen durchgeführt.

Die Überwachung wird mit Schritt 106 eingeleitet, in dem überprüft wird, ob die Signalwerte der Meßeinrichtungen 16 und 18 (P1 und P2) zueinander plausibel sind. Dies wird im vorliegenden Ausführungsbeispiel durch Addition der Signalwerte und Vergleich der Summe mit dem vorgegebenen Toleranzband erreicht. Befindet sich die Summe innerhalb des Toleranzbandes, so werden die Signalwerte als plausibel zueinander erkannt und im Schritt 108 überprüft, ob wenigstens einer der beiden Signalwerte (P1 oder P2) mit dem Schaltsignal S der zusätzlichen Meßeinrichtung 20 plausibel ist. Bei einer einzelnen Schaltfunktion, welche dem Wertebereich der Meßeinrichtungen 16 und 18 in zwei Teilbereiche unterteilt, wird diese Abfrage dadurch vorgenommen, daß bei gegebenem Meßsignalwert P1 oder P2 der korrekte Schaltzustand (bzw. Signalzustand) der Meßeinrichtung 20 (hoher oder niedriger Signalpegel) überprüft wird. Ist dies der Fall, so wird im Schritt 110 das Meßsystem als korrekt arbeitend erkannt und eine entsprechende Marke gesetzt. Andernfalls wird im Schritt 112 die Aussage getroffen, daß das Signal der zusätzlichen Meßeinrichtung 20 unplausibel ist, d. h. daß mit großer Wahrscheinlichkeit die zusätzliche Meßeinrichtung 20 defekt ist. Danach ist die Überwachung beendet.

In einem Ausführungsbeispiel schaltet das Schaltelement das Signal auf der Leitung 50 im Bereich der Leerlaufstellung des Fahrpedals vom niedrigen auf den hohen Signalpegel. Im Leerlaufbereich muß daher der Signalzustand (S) niedrigen Pegel aufweisen, während außerhalb hoher Signalpegel vorliegen muß.

Für den Fall, daß im Abfrageschritt 106 die beiden Signalwerte der Meßeinrichtungen 16 und 18 zueinander nicht plausibel sind, wird im Abfrageschritt 114 zunächst der Meßwert der Meßeinrichtung 16 (P1) und der Schaltzustand (S) der Meßeinrichtung 20 miteinander auf Plausibilität überprüft, wie anhand des Abfrageschritts 108 beschrieben. Sind P1 und S zueinander plausibel, so wird unter Berücksichtigung des Ergebnisses des Abfrageschritts 106 im Schritt 116 festgestellt, daß der Signalwert der Meßeinrichtung 18 (P2) unplausibel ist und somit mit großer Wahrscheinlichkeit von einem Defekt bzw. einem Fehlerzustand dieser Meßeinrichtung auszugehen ist. Dann wird eine entsprechende Marke gesetzt. Dies vor dem Hintergrund, daß bei Plausibilität zwischen P1 und S und Unplausibiltät zwischen P1 und P2 ein Fehler im Zusammenhang mit dem Signal P2 zwangsläufig folgen muß.

Wurde im Abfrageschritt 114 keine Plausibilität zwischen den Werten P1 und S festgestellt, so wird im Abfrageschritt 118 überprüft, ob zwischen den Signale P2 und S eine Plausibilität besteht. Ist dies der Fall, so wird unter Berücksichtigung der Vorgeschichte im Schritt 120 der Signalwert P1 als unplausibel erkannt und von einem Fehler der Meßeinrichtung 16 ausgegangen. Im gegenteiligen Fall wird im Schritt 122 festgestellt, daß keine Plausiblität unter den drei Signalen feststellbar ist.

Die Überwachung ist jeweils nach den Schritten 110, 112, 116, 120 oder 122 beendet.

Nach Beendigung der Überwachung oder während eines Programmdurchlaufes ohne Überwachung wird ab Schritt 124 ein Programmteil zur Bestimmung der Ansteuersignalgröße A für das Stellglied 12 eingeleitet.

Im Abfrageschritt 124 wird überprüft, ob die vorgehende Überwachung das Ergebnis "keine Fehler im Bereich der Meßeinrichtungen feststellbar" (Schritt 110) erbracht hat. Ist dies der Fall, so wird gemäß Schritt 126 vom Normalzustand ausgegangen und das Ansteuersignal A auf der Basis des Signalwertes P1 der Meßeinrichtung 16 gebildet. Die Berechung der Ansteuersignalgröße A erfolgt dabei auf der Basis eines aus der Fahrpedalstellung und anderen Betriebsgrößen gebildeten Sollwerts und des die Stellung der Stelleinrichtung repräsentierenden Ist-Werts unter Anwendung einer bekannten Reglergleichung mit proportionalem, integralem und/oder differentialem Verhalten.

Wurde im Schritt 124 festgestellt, daß das Ergebnis der vorhergehenden Überwachung keine vollständige Übereinstimmung der drei Signale ergab, so wird im Abfrageschritt 128 überprüft, ob das Ergebnis in einer erkannten Unplausiblität des Schalters bestand (Schritt 112).

Ist dies der Fall, so wird im Schritt 130 das Ansteuersignal A auf der Basis der beiden Signalwerte der Meßeinrichung 16 und 18, ihrem Mittelwert oder dem Minimalwert beider Signale, berechnet. Wurde als Ergebnis der vorhergehenden Überwachung keine Unplausibilität des Schalters erkannt, so wird im Abfrageschritt 132 überprüft, ob der Meßwert P1 als unplausibel festgestellt wurde (Schritt 120). Ist dies der Fall, so wird gemäß Schritt 134 das Ansteuersignal auf der Basis des Wertes P2 der Meßeinrichtung 18 ermittelt. Ist der Meßwert P1 nicht unplausibel, so wird im Schritt 136 überprüft, ob das Ergebnis der Überwachung in einer erkannten Unplausibilität des Signals P2 bestand (Schritt 140). Ist dies der Fall, so wird gemäß Schritt 138 das Ansteuersignal auf der Basis des Signalwertes P1 der Meßeinrichtung 16 gebildet, während im gegenteiligen Fall das Ergebnis der Überwachung "keine Plausibilität" war, so daß gemäß Schritt 140 ein Notlauf unter Einschränkung der Verfügbarkeit des Fahrzeugs eingeleitet werden muß.

Danach wird der Programmteil, der die getrennten Bereiche Überwachung und Auswertung des Überwachungsergebnisses aufweist, wiederholt.

Zusammenfassend ist festzustellen, daß außer im Falle "keine Plausibilität" die Verfügbarkeit des Systems durch Umschalten auf als korrekt angenommene Signalwerte jederzeit gewährleistet ist. Insbesondere hat ein fehlerhaftes Plausibilitätsergebnis, welches bei Potentiometern z.B. durch lokal erhöhte Übergangswiderstände hervorgerufen werden kann, keine Auswirkungen auf das Betriebsverhalten des Systems, da kein einschränkender Notlaufbetrieb eingeleitet werden muß. Ferner ist vorteilhaft, daß in der nachfolgenden überwachung ein derartiger Fehler korrigierbar ist und die vollständige Betriebsfähigkeit des Systems wiederhergestellt wird.

Figur 3 und 4 zeigt in schematischer Darstellung eine vorteilhafte Ausführungsform der zusätzlichen Meßeinrichtung 20. Diese ist dabei als berührungsloser Schalter ausgeführt, der in das aus der eingangs genannten deutschen Patenanmeldung bekannte Gehäuse der Meßeinrichtungen 16 und 18 oder vergleichbarer Anordnungen integriert ist.

Das Gehäuse der Meßeinrichtungen 16 und 18 umfaßt einen feststehenden Teil 200 sowie einem beweglichen Teil 202, welcher um die Drehachse 204 drehbar ausgeführt ist.

Der drehbare Teil ist starr mit dem leistungsbestimmenden Element oder dem vom Fahrer betätigbaren Bedienelement verbunden, wobei die die Bewegung des leistungsbestimmenden Elements bzw. des Bedienelements übertragende Achse in die Öffnung 208 des starren Gehäuseteils 200 hineinragt und in der Passung 206 des beweglichen Teils 202 drehfest verankert ist.

Ferner sind in Figur 3 als Beispiel die an der Unterseite 210 des beweglichen Teils 202 angebrachten Schleifer 42 und 44 der in Fig. 1 dargestellten Stellungspotentiometer skizziert. Diese Schleifer stehen in Kontakt mit den entsprechenden auf der gegenüberliegenden Seite des festen Gehäuseteils 200 angebrachten Widerstandsbahnen 38 bzw. 40. Bei Drehung des beweglichen Teils um die Drehachse 204 infolge einer Bewegung des mit der in Fig. 3 dargestellten Meßeinrichtung verbundenen Elements bewegen sich die Schleifer über die entsprechende Widerstandbahn in einer zur Zeichnungsebene von Fig. 3 senkrechten Ebene. Über in Fig. 3 nicht dargestellte Kontakte, Verbindungsleitungen und Steckverbindungen werden die Schleiferspannungen an die Steuereinheit 10 abgegeben. Die Potentiometeranordnung wiederholt sich im Falle von einer Meßeinrichtung zur Erfassung von Gaspedal- und Drosselklappenstellung wie im eingangs genannten Stand der Technik vorgestellt auf der anderen Seite der Drehachse 204.

Ferner sind gegenüberliegend an der Innenseite des festen Gehäuseteils 200 die Elemente eines Hall-Schalters angebracht. In Fig. 3 ist an der oberen Innenseite 212 ein Dauermagnet 214, gegenüberliegend an der unteren Innenseite das Hall-Element 216 vorgesehen. In einem anderen Ausführungsbeispiel kann diese Anordnung umgekehrt gewählt werden. Ferner ist es nicht notwendig, daß Hallschalter und Potentiometer in derselben Schnittebene durch die in Fig. 3 gezeigte Anordnung liegen.

Der berührungslose, verschleißfreie Hall-Schalter kann ein käuflicher Hall-Schalter, z. B. Siemens TLE 4903 oder Spargue UGS-3019 sein. Die notwendige elektrische Verbindung zur Strom- bzw. Spannungsversorgung sowie zu Rückmeldung des Schaltzustandes an die Steuereinheit 10 erfolgt über die skizzierten Anschlüsse 218.

Ein weiteres wesentliches Element der Anordnung nach Fig. 3 zur Realisierung einer Schaltfunktion ist das mit dem beweglichen Teil 202, dem Schleiferträger, fest verbundene Element 220. Dieses ist zwischen dem beweglichen Teil 202 und dem festen Gehäuse 200 eingespannt und dreht sich entsprechend den Bewegungen des Schleiferträgers um die Drehachse 204. Ferner ragt dieses Element über den beweglichen Teil hinaus in den Raum zwischen Magnet 214 und Hall-Element 216, wie in Figur 4 skizziert.

Das Element 220 ist vorzugsweise als Blechstreifen ausgeführt, welcher im Bereich des Magneten 214 und des Hall-Elements 216 kreissegmentförmig senkrecht zur Zeichenebene nach Fig.3 gestaltet ist (Figur 4). Dabei können in anderen Ausführungsbeispielen auch andere Formen gewählt werden, wesentlich ist jedoch, daß das Element 220 nur einen vorgegebenen Teil des Drehbereichs des beweglichen Teils 202 bzw. des mit diesem verbundenen Elements (Gaspedal/Drosselklappe/etc) abdeckt.

In anderen Ausführungsbeispielen besteht das Element 220 aus anderen, Magnetfelder abschirmenden Materialien.

Durch das Element 220 wird die Schaltfunktion realisiert. Der Schaltpunkt, d.h. der Winkel, bei dem ein Wechsel des Schaltzustandes stattfindet, wird je nach Ausführungsform durch die Größe des in den Raum zwischen Magnet 214 und Hall-Element 216 ragenden Elements 220 und/oder durch dessen Position im Vergleich zum Nullpunkt (Leerlaufanschlag des Gaspedals/Drosselklappe) eingestellt.

Da beide Elemente, Magnet 214 und Hall-Element 216 am feststehenden Teil des Gehäuses gegenüberliegend angebracht sind, erzeugt das Hall-Element 210 in jeder Stellung des beweglichen Teiles durch den vom Magneten 214 hergestellten magnetischen Durchfluß durch das Hall-Element ein Signal. Dies würde bedeuten, daß der aus 216 und 214 gebildete Schalter in jeder Stellung geschlossen ist. Um die Schaltfunktion herbeizuführen, ist das Element 220, das Abschirmblech, derart bemessen, daß das Hall-Element 216 vom Magneten 214 und dessen Magnetfeld für einen bestimmten Stellungsbereich des beweglichen Elements 202 abgeschirmt ist. In diesem Bereich erzeugt das Hall-Element kein Signal, der Schalter gilt als geöffnet.

Fig. 3 und 4 zeigt die Situation im Leerlaufzustand der Anordnung.

In Figur 4 ist eine Aufsicht der Anordnung nach Figur 3 skizziert. Die Bezugszeichen bezeichnen dieselben Elemente, so daß auf eine detailliertre Beschreibung verzichtet wird.

## Patentansprüche

1. Einrichtung zur Erfassung einer veränderlichen Größe bei Fahrzeugen, mit wenigstens zwei Meßeinrichtungen, die die veränderliche Größe erfassen und ein entsprechendes Signal erzeugen, mit Überwachungsmitteln, die auf der Basis der Meßsignale die Funktion der Meßeinrichtungen überprüfen, mit Mitteln, die auf der Basis wenigstens eines der Meßsignale die Antriebsleistung eines Motors in einem Fahrzeug steuern,
dadurch gekennzeichnet,
daß zusätzlich wenigstens ein Schaltelement vorhanden ist, das ein drittes die veränderliche Größe anzeigendes Signal erzeugt.

2. Einrichtung nach Anspruch 1, dadurch gekennzeichnet, daß Entscheidungsmittel auf die Basis des dritten Signals und der Meßsignale wenigstens eines der Meßsignale zur Auswertung zur Steuerung der Antriebsleistung auswählen.

3. Einrichtung nach einem der vorhergehenden Ansprüche, dadurch gekennzeichnet, daß die Meßeinrichtungen Stellungsgeber, insbesondere Potentiometer darstellen und daß die Meßeinrichtungen insbesondere die Stellung eines leistungsbestimmenden Elements und/oder eines vom Fahrer betätigbaren Bedienelements eines Kraftfahrzeugs erfassen.

4. Einrichtung nach einem der vorhergehenden Ansprüche, dadurch gekennzeichnet, daß das Schaltelement ein Hall-Schalter ist.

5. Einrichtung nach einem der vorhergehenden Ansprüche, dadurch gekennzeichnet, daß das Schaltelement ein Hall-Schalter ist, der mit den Meßeinrichtungen in einem Gehäuse angebracht ist.

6. Einrichtung nach einem der vorhergehenden Ansprüche, dadurch gekennzeichnet, daß zwischen dem feststehenden Magneten des Hallschalters und dem feststehenden Hallelement ein Abschirmmittel angebracht ist, welches mit dem Bedienelement oder leistungsbestimmenden Element verbunden ist und derart bemessen ist, daß in einem vorbestimmten Bewegungsbereich des Elements der Magnet nicht auf das Hallelement wirkt.

7. Einrichtung nach einem der vorhergehenden Ansprüche dadurch gekennzeichnet, daß das Abschirmmittel ein Blech ist, welches starr mit der Drehachse des Stellungsgebers verbunden ist und sich im gleichem Maße wie die Potentiometerschleifer bewegt.

8. Einrichtung nach einem der vorhergehenden Ansprüche, dadurch gekennzeichnet, daß folgende Überwachungsschritte ausgeführt werden:
- Plausibiltätsvergleich zwischen den Meßsignalen,
- Plausibiltätsvergleich jeweils einzeln zwischen den Meßsignalen und dem Schaltzustand des Schaltelements.

9. Einrichtung nach einem der vorhergehenden Ansprüche, dadurch gekennzeichnet, daß aus den Plausibilitätsvergleichen der zu den beiden anderen unplausible Signalwert als fehlerhaft erkannt wird, bei Unplausibilität zwischen allen Signalwerten die gesamte Einrichtung als fehlerhaft erkannt wird.

10. Einrichtung nach einem der vorhergehenden Ansprüche dadurch gekennzeichnet, daß bei fehlerhaftem Signalwert die Antriebsleistung auf der Basis wenigstens eines der zueinander plausiblen Signalwerte gesteuert wird, während bei fehlerhafter Einrichtung ein Notlaufbetrieb mit Leistungsbegrenzung eingeleitet wird.
